# EUROPEAN PATENT APPLICATION

(11) **EP 0 702 359 A1**
(43) Date of publication of application: **20.03.1996**
(21) Application number: 95114665.3
(22) Date of filing: 18.09.1995
(51) Int. Cl.: G11B 5/702, G11B 5/712, G11B 5/70

(54) **Magnetic recording medium**

(30) Priority: 19.09.1994 JP 223254/94
(71) Applicant: MINNESOTA MINING AND MANUFACTURING COMPANY, St. Paul, Minnesota 55133-3427 (US)
(72) Inventor: Yamashita, Kumiko, Setagaya-ku, Tokyo 158 (JP)
(74) Representative: VOSSIUS & PARTNER

(57) **Abstract**

A magnetic recording medium comprising a non-magnetic support having a thickness of 9 µm or less and a magnetic layer comprising a magnetic material. The magnetic layer is disposed on the non-magnetic support. The magnetic layer has a porosity of at least 0.40 m²/g. The magnetic layer can remove air from a space between the magnetic recording medium and a rotating magnetic recording head.

## Description

The present invention relates to magnetic recording media such as a magnetic recording tape. The magnetic recording media are generally useful in high density recording applications, i.e., where a magnetic recording head rotates past the magnetic recording medium at a relative speed of at least 10 meters per second (m/s). These magnetic recording media are particularly useful as a thin magnetic recording medium which can be housed in a relatively small cassette housing.

Magnetic recording systems read and record signals onto and from a magnetic recording medium through a rotating magnetic recording head. To read and write information accurately, the magnetic recording head comes into close contact with the magnetic recording medium. Mechanical properties of the magnetic recording medium can affect how well the magnetic recording head contacts the magnetic recording medium.

In the field of magnetic recording media, it is advantageous to provide a relatively thinner magnetic tape for use as a magnetic recording medium. A thinner magnetic recording tape will allow an increase in the length of tape that can be stored within a cassette housing, a decrease in the size of a cassette housing, or both. However, as the thickness of the magnetic recording medium decreases, the strength of the medium might also decrease.

Reducing the strength of the magnetic recording medium might cause the medium to deform near the magnetic recording head during tape movement. Deformation of the magnetic recording medium can cause decreased contact between the magnetic recording head and the magnetic recording medium. Decreased contact might in turn reduce the signal output provided by the magnetic recording medium.

The mechanical properties (e.g., strength) of a magnetic recording medium can be improved by constructing the medium of a non-magnetic support having desired mechanical properties. Examples of such properties include the support material's Young's modulus in the machine (longitudinal) direction, the Young's modulus in the transverse (width) direction, and the relationship between the two Young's moduli.

JP-A-4-146518 describes a magnetic recording medium constructed of a non-magnetic support of a polyethylene naphthalate (PEN) film. The PEN film has a Young's modulus in a machine direction (MD) of less than 800 kg/mm² and a Young's modulus in a transverse direction (TD) of at least 700 kg/mm².

JP-A-4-271010 describes a magnetic recording medium constructed of a non-magnetic support of a polyethylene terephthalate (PET) film. The PET film has a Young's modulus in a machine direction (MD) of at least 700 kg/mm² and a Young's modulus in a transverse direction (TD) of 450 to 700 kg/mm².

JP-A-5-128489 describes a magnetic recording medium constructed of a non-magnetic support of a PEN film. The PEN film has a Young's modulus (TD) in a transverse direction that is at least equal to the Young's modulus (MD) in a machine direction and is at least 800 kg/mm². Disposed on the PEN film is a magnetic layer having a Young's modulus (MD) in the machine direction of at least 1500 kg/mm².

JP-A-5-189748 describes a magnetic recording medium that is constructed of a non-magnetic support of a PEN film, a polyimide film or a polyamide film. The sum of the Young's moduli of the non-magnetic support, in machine and transverse directions, is at least 1400 kg/mm².

JP-A-5-250659 describes a magnetic recording medium that is constructed of a non-magnetic support of a PEN film. The PEN film has a Young's modulus (TD) in a transverse direction that is at least equal to the Young's modulus (MD)in a machine direction. TD is at least 8700 kg/mm² and MD is at least 600 kg/mm². The ratio of the thickness of the magnetic recording medium to the non-magnetic support is 1:(0.55-0.75).

Factors other than the mechanical properties of the magnetic recording medium may also have an affect on the degree of contact between the magnetic recording head and the magnetic recording medium. If the relative speed of the magnetic recording head past the magnetic recording media is sufficiently high (at least 10 m/sec), a layer of air may form between the magnetic layer and the rotating magnetic head. This air layer causes the magnetic recording medium to float away from the magnetic head, reducing head contact, and decreasing signal output. The present invention provides a magnetic recording medium that reduces the formation of an air layer between a magnetic recording medium and a magnetic recording head.

An aspect of the present invention is a magnetic recording medium constructed of a non-magnetic support having a thickness of 9 µm or less and a magnetic layer comprising a magnetic material. The magnetic layer is disposed on the non-magnetic support. The magnetic layer has a porosity of at least 0.40 m²/g. The recording layer can remove air from a space between the magnetic recording medium and a rotating magnetic recording head.

In the present application, "porosity" is represented by specific surface area as measured by BET (Brunauer, Emmett and Teller) adsorption of nitrogen gas.

The present invention is particularly useful in magnetic recording applications that require a magnetic recording head to rotate past the magnetic recording medium at a high rate of speed (e.g., 10 m/s or more). More specifically, the magnetic recording medium of the present invention is particularly useful in high-density recording applications, such as digital recording systems. As examples, the magnetic recording medium of the present invention can be used in a digital recording system such as the DII format (relative head speed of 27.3 m/sec), the DIII format (relative head speed of 21.4 m/sec) or a recording format for a proposed Hi-Vision video tape recorder (relative head speed of 11 to 22 m/sec). These applications operate at a higher head speed than do the conventional VHS format (relative head speed of 5.78 m/sec) or the beta format (relative head speed of 6.97 m/sec) analog recording systems.

The magnetic recording medium of the present invention comprises a magnetic layer disposed on a non-magnetic support.

In the magnetic recording medium of the present invention, the magnetic layer can act as a means for removing air from a space between the magnetic recording medium and a rotating magnetic recording head. In magnetic recording applications that include a relatively high speed rotating magnetic head, a layer of air can form between the rotating magnetic head and the magnetic recording medium. In the practice of the present invention, the magnetic recording layer allows air to flow from a space between the magnetic recording medium and the rotating magnetic recording head. The flow of air away from the space between the magnetic recording medium and the rotating magnetic recording head will allow increased contact between the magnetic recording head and the magnetic recording medium, and thereby increase the signal output obtained from the magnetic recording medium.

The magnetic recording medium of the present invention comprises a magnetic layer that has a porosity sufficient to allow air to flow away from a space between the magnetic recording medium and a rotating magnetic recording head. A porosity of at least 0.40 square meters per gram (m²/g), as represented by the specific surface area measured by the conventional BET method, is typically suitable. For applications requiring increased magnetic head speeds, porosity may be increased. For example, when the relative speed of the magnetic recording head to the magnetic recording medium is 15 m/s or greater, a porosity of 0.42 m²/g or greater can be used.

One method of achieving a sufficiently porous magnetic layer is through the use of appropriate calendering conditions. The appropriate calendering conditions will depend on various factors, including among other things, the type and thickness of the non-magnetic support, and the materials of the magnetic recording layer. Depending on these factors, the following calendering conditions can be adjusted to achieve the desired porosity: the dryness of the magnetic recording layer (i.e., the amount of residual solvent remaining); the pressure used in calendering; and the temperature used in calendering.

When the thickness of the non-magnetic support is, for example, 6 to 8 µm, the pressure used during calendering of the magnetic layer is preferably about 360 kg/cm or less. When the magnetic recording layer includes a binder such as a mixture of polyurethane, polyvinyl chloride, and an isocyanate, a preferred calendering temperature is about 50°C or lower. When the magnetic recording layer includes a solvent having a low drying rate such as cyclohexanone, the magnetic layer is dried until the amount of the residual solvent reaches 0.8 µg/cm² or less.

In the magnetic recording medium of the present invention, the non-magnetic support can be made of any material known to be useful as a non-magnetic support for a magnetic recording medium. Examples of suitable non-magnetic support materials are plastic films of PBT, PEN, polyamide, polyimide, polyphenylene sulfide, polyether ketone, polyether ester, polyether sulfone, polyether imide, polysulfone, and a film comprising a plastic film having a low Young's modulus, such as a PET film, on which a metal layer is disposed to improve the Young's modulus. Such films are disclosed in JP-A-4-195919 and JP-A-5-135348.

Biaxially oriented plastic films are generally useful because these films can have a relatively higher Young's modulus. Preferred biaxially oriented plastic films include those that exhibit good mechanical properties, and good traveling properties. These include, for example, polyamide or polyimide films. Of polyamide or polyimide films, aromatic polyamide ("aramid") films or aromatic polyimide films are preferred. In the aramid film, the sum of the Young's moduli in the machine and transverse directions can be 2000 kg/mm² or larger, providing the magnetic recording medium with improved traveling properties and durability.

The non-magnetic support can be of any thickness known to be useful as a non-magnetic support for magnetic recording media. For example, the non-magnetic support may be 9 µm or less, 8 µm or 6 µm or less, and generally not less than about 4 µm.

The Young's modulus of the non-magnetic support in each of the machine direction and the transverse direction can be 750 kg/mm² or more, for example at least 1000 kg/mm². When the Young's modulus in the machine direction is less than 750 kg/mm², the magnetic recording medium can tend to deform, reducing contact between the magnetic recording head and the magnetic recording medium. This reduced contact between the magnetic recording medium and the magnetic recording head can result in a reduced signal output. The same can apply when the Young's modulus in the transverse direction is less than 750 kg/mm². A sum of the Young's modulus in the machine direction, plus the Young's modulus in the transverse direction of at least 2000 kg/mm² is preferred to improved contact between the magnetic recording medium and the magnetic recording head, and to increase signal output and traveling and durability properties of the magnetic recording medium.

The ratio of the Young's modulus (MD) of the non-magnetic support in the machine direction to the Young's modulus (TD) in the transverse direction (MD/TD) can be in the range from 0.5 to 2.5. When MD/TD is less than 0.5 or more than 2.5, the contact between the magnetic recording head and the magnetic recording medium tends to be reduced. Preferably, the Young's moduli in the machine and transverse directions can be substantially equal, with MD/TD being in the range from about 0.8 to 1.2.

In the magnetic recording media of the present invention, the magnetic layer can be formed from materials generally known in the art. The magnetic layer generally comprises a magnetic material dispersed in a binder.

The particular magnetic material used is not limited, and may be any magnetic material known to be useful in magnetic recording media. Examples of suitable magnetic materials include magnetic metals and magnetic metal oxides. A metal material having Fe, Co, Fe alloys containing Ni, Co-Ni alloys, and the like can be used. Generally, magnetic metal material can have a larger coercive force (e.g., 900 to 23,000 Oe) than a magnetic metal oxide material, and therefore metal materials are generally preferred for use to record high frequency signals.

One magnetic material generally suitable for use in the practice of the present invention is magnetic iron particles, wherein the surfaces of the particles are coated with an oxide layer. The oxide layer on the particle surface will improve the stability of the magnetic properties of the magnetic material.

The shape of the magnetic material particles can be acicular. Acicular means a particle having a ratio of a longer axis to a shorter axis of at least 5. Examples of acicular metal magnetic materials are "1300 HB" (a trade name) available from Kanto Denka Kogyo Kabushikkaisha; "HM-60" (a trade name) available from Dowa Mining Co., Ltd.). Acicular magnetic materials are further desirable because they facilitate the production of a magnetic layer having a relatively higher porosity.

The amount of the magnetic material in the magnetic layer is not critical and can be any amount that is useful when included in a magnetic recording medium. For example, the amount of the magnetic material can be from 65 to 85% by weight, based on the weight of the magnetic layer.

The binder used in the magnetic layer can comprise binder materials selected from those that are conventionally used in magnetic recording media. Examples of suitable binder materials include, but are not limited to polymeric materials such as polyurethanes, polyisocyanate, and polymers derived from vinyl monomers including vinyl acetate, vinyl chlorides, vinyl alcohols, etc.

The thickness of the magnetic layer is selected so that the total thickness of the magnetic recording medium is, for example, 11 µm or less. The thickness of the magnetic layer can be from 1.5 to 4 µm, such as 2 to 3.5 µm. When the thickness of the magnetic layer is less than 1.5 µm, it may be difficult to produce a magnetic layer having a porosity of at least 0.40 m²/g. When the thickness of the magnetic layer is greater than 4 µm, the flexibility of the magnetic recording medium may be reduced, and contact between the magnetic recording medium and the magnetic recording head may be decreased.

A total thickness of the magnetic recording medium of not greater than 11 µm is preferred because a relatively thin recording medium will allow a greater length of a magnetic recording medium (such as magnetic tape) to be stored in a cassette housing; alternatively, the same amount of tape could be stored in a smaller cassette housing.

In one embodiment of the magnetic recording medium of the present invention, the root mean square (RMS) surface roughness of the magnetic layer is less than 10 nm, for example 6 nm or less. A magnetic layer having an RMS surface roughness of less than 10 nm will allow improved contact between the magnetic recording medium and the magnetic recording head. This improved contact will provide an improved signal output.

An optional back coating layer can be provided on a surface of the non-magnetic support opposite from the surface carrying the magnetic layer. A back coating is useful to improve the traveling properties (e.g., frictional properties) and durability of the magnetic recording medium. These back coating layers are known in the art, and typically comprise a pigment, such as carbon black, dispersed in a binder. Such a back coating layer is described in JP-5-234061.

Both the magnetic recording layer and the optional back coating layer can be deposited on the non-magnetic substrate by methods that are generally known in the art for the production of magnetic recording media. Examples of suitable coating methods include gravure coating, curtain coating, roll coating, die coating, knife coating, spray coating, and the like.

The objects and advantages of the present invention are further illustrated by the following examples, but the particular materials and amounts thereof recited in these examples, as well as other conditions and details, should not be construed to unduly limit this invention.

### Examples

The present invention will be illustrated by the following Examples and Comparative Examples. In the Examples and Comparative Examples, each magnetic tape was produced and signal output and porosity were measured as follows.

### Production of a magnetic tape (coating and calendering)

On a surface of a non-magnetic support a back coating paint was coated and dried to form a back coating. On the opposite surface of the non-magnetic support, a magnetic paint was coated and dried to form a magnetic layer, followed by calendering. The drying conditions and the calendering pressure are described in the Examples and Comparative Examples.

The magnetic coating paint was prepared as follows. The raw materials described in Table 1 (except a polyisocyanate) were charged in a vessel and mixed by a high speed mixer for about 30 minutes. The mixture was then charged in a sand mill and dispersed for about 20 hours using a glass bead media. Just before coating, the polyisocyanate was added to the dispersion and mixed by a high speed mixer for about 20 minutes to obtain the magnetic coating paint.

The back coating paint was prepared from the raw materials of Table 2 in a similar fashion.

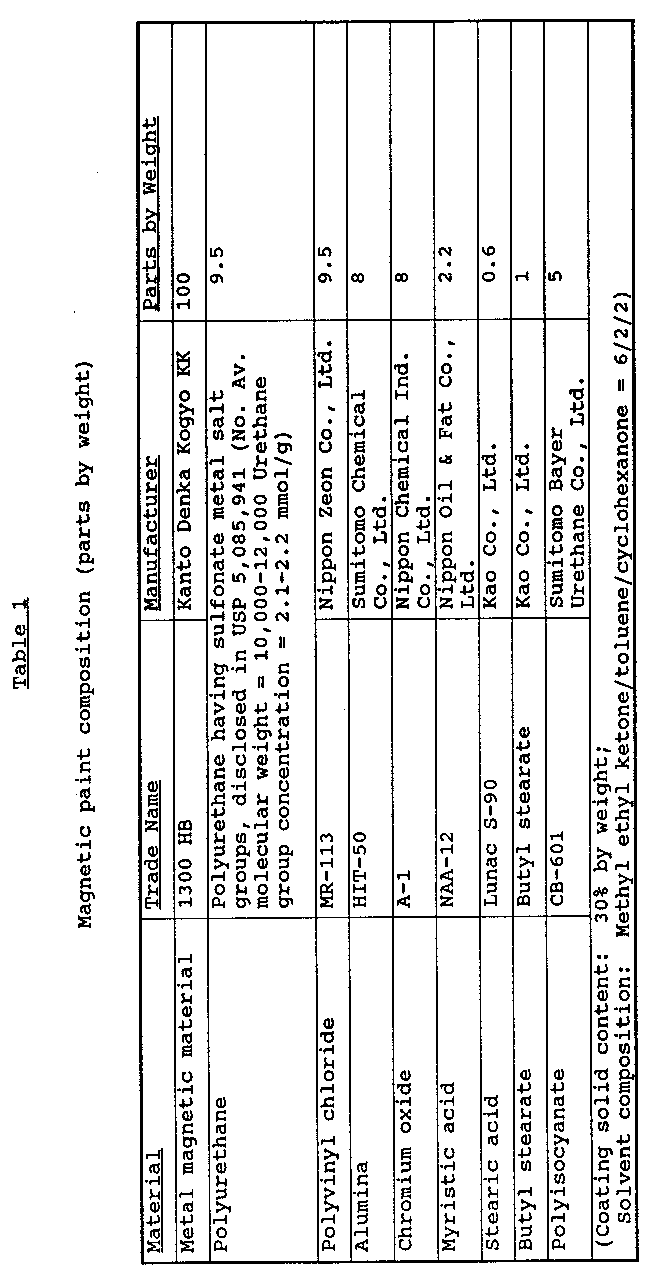

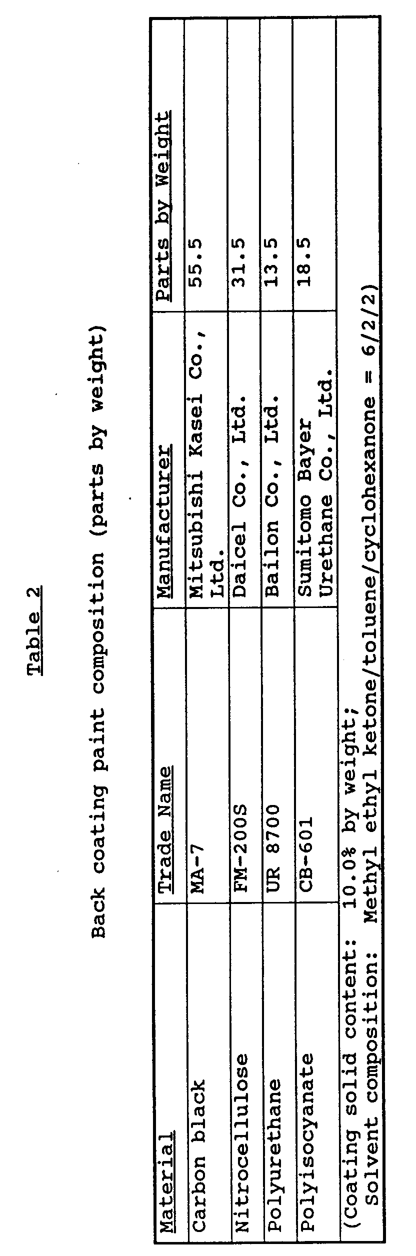

The signal output of Examples 1-4 and Comparative Examples 1-4 was determined by the following method. Samples of the magnetic recording medium were slit to a width of 0.5 inch (about 1.27 cm) to produce a magnetic recording tape. A signal having a frequency of 33.5 Mhz was magnetically recorded onto each tape sample using a DIII video tape recorder (manufactured by Matsushita Electric Industrial Co., Ltd.). The relative speed of the magnetic recording head to the magnetic tape was 21.4 m/sec. The signal outputs of each magnetic tape sample was measured as a value relative to the magnetic tape of Example 3, which was defined to have a signal output equal to ±0 dB.

The porosity of the magnetic layer of each sample, represented by specific surface area, was measured by the conventional BET method, briefly described hereinafter.

Nitrogen gas was adsorbed onto a 0.381 cm x 2 m magnetic recording medium sample by placing the sample in a glass vessel, filling the vessel with nitrogen gas, and cooling the vessel with liquid nitrogen. After adsorbing the nitrogen gas onto the sample, the vessel was warmed to room temperature, and the amount of desorbed nitrogen gas was measured. The amount of desorbed nitrogen was taken to be the amount of adsorbed nitrogen, from which the specific surface area of the sample was calculated. The specific surface area of the magnetic layer was obtained by deducting the specific surface area of the non-magnetic support from the surface area of the 0.381 cm x 2 m magnetic recording medium sample.

Dryness of the magnetic layer is a measure of the amount of residual solvent in the magnetic layer. A method of making this measurement is through the use of a conventional solvent extraction method. One suitable method uses carbon disulfide as a solvent.

### Example 1

In this Example, a non-magnetic support made of an aramid film was used to produce a magnetic recording tape. The aramid film was "3MC2" (a trade name) available from Toray having a thickness of 8 µm. The Young's modulus of the aramid film in the machine direction (MD) was 1350 kg/mm², and the Young's modulus in the transverse direction (TD) was 1410 kg/mm². The ratio MD/TC was 0.96.

The magnetic layer was dried at a temperature of 100°C for 7 seconds, leaving from 0.7 to 0.8 µg/cm² of residual solvent (cyclohexanone) in the magnetic layer.

The tape was calendered at a pressure of 350 kg/cm. After calendering, the thickness of the back coating was 0.5 µm, the thickness of the magnetic layer was 2.5 µm and the total thickness of the magnetic recording medium was 11 µm.

The porosity of the magnetic layer was 0.42 m²/g. The root mean square surface roughness of the magnetic layer was 4.8 nm, which was measured using a three-dimensional optical surface roughness meter (TOPO-3D manufactured by WYKO Co., Ltd.). The signal output of the magnetic tape of this Example was +1.8 dB.

### Example 2

A magnetic recording tape was produced having the same structure as that in Example 1 except that the porosity of the magnetic layer was 0.50 m²/g and the RMS surface roughness of the magnetic layer was 5.3 nm. The same production procedures as those in Example 1 were repeated except that the pressure used in the calendering step was 270 kg/cm. The signal output of the magnetic tape of this Example was +2.0 dB.

### Comparative Example 1

A magnetic recording tape was produced having the same structure as that in Example 1 except that the porosity of the magnetic layer expressed by the specific surface area was 0.33 m²/g. The same production procedures as those in Example 1 were repeated except that the magnetic layer was dried at a temperature of 90°C, and the amount of the residual solvent (cyclohexanone) in the magnetic layer was 1.2 to 1.3 µg/cm². The signal output of the magnetic tape of this Comparative Example was -0.5 dB.

### Comparative Example 2

A magnetic recording tape was produced having the same structure as that in Example 1 except that the porosity of the magnetic layer was 0.12 m²/g. The same production procedures as those in Example 1 were repeated except that the magnetic layer was dried at a temperature of 80°C, and the amount of the residual solvent (cyclohexanone) in the magnetic layer was adjusted to 1.5 to 1.6 µg/cm². The signal output of the magnetic tape of this Comparative Example was -4.3 dB.

### Example 3

A magnetic recording tape was produced according to the same production procedures as Example 1 except that a polyethylene naphthalate film was used as a non-magnetic support. The polyethylene naphthalate film used in this Example had a thickness of 8 µm, the Young's modulus in the machine direction (MD) was 820 kg/mm², and the Young's modulus in the transverse direction (TD) was 750 kg/mm². The MD/TD ratio was 1.09.

As described above, the magnetic recording tape of this Example was used as the standard tape in the measurement of the signal output in Examples 1, 2, and 4 and Comparative Examples 1-4. That is, the signal output of the magnetic tape of Example 3 was defined to be ±0 dB.

### Comparative Example 3

A magnetic recording tape was produced by the same production procedures as Comparative Example 1 except that a polyethylene terephthalate film was used as a non-magnetic support. The polyethylene terephthalate film used in this Comparative Example had a thickness of 8 µm, a Young's modulus in the machine direction (MD) of 800 kg/mm², and a Young's modulus in the transverse direction (TD) of 500 kg/mm². The MD/TD ratio was 1.60. The signal output of the magnetic tape of this Example was -3.3 dB.

### Example 4

A magnetic recording tape was produced by the same procedures in Example 1 except that an aramid film having a thickness of 3.5 µm was used as the non-magnetic support. The aramid film used in this Example had the same properties as that used in Example 1 except the thickness. The signal output of the magnetic tape of this Example was +1.7 dB.

### Reference Example 1

A signal having a frequency of 8 MHz was magnetically recorded onto the magnetic tape of Example 1 using an ED beta video tape recorder (manufactured by Sony). The magnetic recording head traveled past the magnetic recording medium at a relative speed of 6.97 m/s.

The signal output of this magnetic tape was defined as ±0 dB. The signal outputs of the magnetic tapes used in Comparative Reference Examples 1 and 2 were then expressed as relative values using the magnetic tape of this Reference Example 1 as a standard tape.

### Comparative Reference Example 1

A signal was magnetically recording as in Reference Example 1, except that the signal was recorded on the magnetic tape produced in Comparative Example 1. The signal output measured in this Comparative Reference Example was +0.3 dB.

### Comparative Reference Example 2

A signal was magnetically recording as in Reference Example 1, except that the signal was recorded on the magnetic tape produced in Comparative Example 2. The signal output measured in this Comparative Reference Example was +0.1 dB.

The results in Reference Example 1 and Comparative Reference Examples 1 and 2, indicate that when a magnetic recording head rotates past the magnetic recording medium at a relatively low speed, (i.e., less than 10 m/sec), the signal output is not materially affected by a change in the porosity of the magnetic layer.

## Claims

1. A magnetic recording medium comprising:
a non-magnetic support having a thickness of 9 µm or less; and
a magnetic layer comprising a magnetic material, the magnetic layer being disposed on the non-magnetic support, wherein the magnetic layer has a porosity of at least 0.40 m²/g.

2. The magnetic recording medium of claim 1, wherein the non-magnetic support has a Young's modulus of at least 750 kg/mm² in a machine direction and a Young's modulus of at least 750 kg/mm² in a transverse direction.

3. The magnetic recording medium of claim 1 or 2, wherein a total thickness of the magnetic recording medium is not greater than 11 µm.

4. The magnetic recording medium of any of claims 1 to 3, wherein the sum of the Young's moduli in the machine and transverse directions of the non-magnetic support is at least 2000 kg/mm².

5. The magnetic recording medium of any of claims 1 to 4, wherein the magnetic material is a magnetic metal, and wherein the non-magnetic support comprises an aromatic polyamide film.

6. The magnetic recording medium of any of claims 1 to 5, wherein a ratio of the Young's modulus of the non-magnetic support in the machine direction to the Young's modulus in the transverse direction ranges from 0.5 through 2.5.

7. The magnetic recording medium of any of claims 1 to 6, wherein a surface of the magnetic layer has a root mean square surface roughness of less than 10 nm.

8. The magnetic recording medium of any of claims 1 to 7, wherein the magnetic layer allows air to flow from a space between the magnetic recording medium and a rotating magnetic recording head.

9. The magnetic recording medium of claim 8, wherein the magnetic recording head rotates past the magnetic recording medium at a relative speed of greater than 10 m/s.
